# EUROPÄISCHE PATENTSCHRIFT

(11) **EP 1 498 457 B1**
(45) Veröffentlichungstag und Bekanntmachung des Hinweises auf die Patenterteilung: **10.08.2005**
(21) Anmeldenummer: 04014851.2
(22) Anmeldetag: 24.06.2004
(51) Int. Cl.: C08L 83/04, C08K 3/36, C08K 9/06, C08G 77/38, C08G 77/08

(54) **Lagerstabile Siliconmassen**
Storable polysiloxane compositions
Compositions de polysiloxanes stables au stockage

(30) Priorität: 04.07.2003 DE 10330267; 13.11.2003 DE 10353062
(43) Veröffentlichungstag der Anmeldung: 19.01.2005
(73) Patentinhaber: Wacker-Chemie GmbH, 81737 München (DE)
(72) Erfinder: Wörner, Christof, Dr., 84489 Burghausen (DE)
(74) Vertreter: Gössmann, Christoph

(56) Entgegenhaltungen:
- EP-A- 0 285 091
- EP-A- 0 319 977
- EP-B- 0 208 285
- US-A- 4 013 611
- US-A- 5 408 025
- US-A- 5 457 220
- US-A- 5 534 608

## Beschreibung

Die Erfindung betrifft lagerstabile Siliconmassen und ein Verfahren zu ihrer Herstellung.

Bekanntermaßen können durch Zusatz von verstärkenden Füllstoffen, wie z.B. Kieselsäure oder Ruß, die mechanischen Eigenschaften von Siliconelastomeren verbessert werden.

DE-3839900 beschreibt den Einsatz vorhydrophobierter Kieselsäure in Siliconmassen. Demgegenüber wird in EP 798342 die Herstellung von Siliconmassen beschrieben, wobei die hydrophile Kieselsäure mit Silazanen in Gegenwart von Polysiloxanen und Wasser hydrophobiert wird. Bei beiden Varianten verbessert die Hydrophobierung der Kieselsäure die Lagerstabilität der unvernetzten Siliconmassen. Jedoch ist die Lagerstabilität immer noch unzureichend.

Es bestand die Aufgabe, die Lagerstabilität von Siliconmassen, die verstärkende Füllstoffe enthalten, zu verbessern.

Gegenstand der Erfindung sind lagerstabile Siliconmassen enthaltend
(A) 100 Gewichtsteile Organopolysiloxan(e) mit einem OH-Gehalt, bezogen auf Si-gebundene OH-Gruppen, von 1 bis 100 Gew.-ppm.
(B) 1-200 Gewichtsteile Füllstoff(e) mit einer spezifischen Oberfläche von mindestens 50 m²/g.

Es wurde überraschend gefunden, dass nicht nur die Hydrophobierung der Kieselsäure für die Lagerstabilität von essentieller Bedeutung ist, sondern dass auch ein niedriger Gehalt an Si-gebundenen OH-Gruppen der eingesetzten Polyorganosiloxane von entscheidender Rolle ist.

(A) kann ein beliebiges Polyorganosiloxan mit einem OH-Gehalt, bezogen auf Si-gebundene OH-Gruppen, von 1 bis 100 Gew.-ppm, bevorzugt von 2-80 Gew.-ppm, besonders bevorzugt von 3-50 Gew.-ppm, sein. Es können auch Mischungen von unterschiedlichen Polyorganosiloxanen eingesetzt werden. Die OH-Gruppen können an folgende Struktureinheiten gebunden sein:

R₂O_{1/2}Si-OH, R₁O_{2/2}Si-OH, O_{3/2}Si-OH

R entspricht den Resten R¹, R² und H. Besonders bevorzugt sind Methyl, Vinyl, Phenyl, 1,1,1-Trifluorpropyl und H.

(A-C) ist eine bevorzugte Variante von (A), aber es muss pro Molekül durchschnittlich mindestens ein Rest mit einer aliphatischen Kohlenstoff-Kohlenstoff-Mehrfachbindung enthalten sein, wobei üblicherweise Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet werden, wobei bevorzugt Vinyl am Kettenende ist. Besonders bevorzugt sind Vinyl-terminierte, lineare Organopolysiloxane, wobei auf Grund unvollständiger Vinyl-Funktionalisierung der Kettenenden und damit verbundener restlicher Si-OH-Gruppen am Kettenende auch ein geringer Anteil an Organopolysiloxanen mit nur einer aliphatisch ungesättigten Kohlenstoff-Kohlenstoff-Mehrfachbindung und ein geringer Anteil an Organopolysiloxanen mit keiner aliphatisch ungesättigten Kohlenstoff-Kohlenstoff-Mehrfachbindung vorhanden sind.

(A-D) ist eine bevorzugte Variante von (A), aber es muss pro Molekül durchschnittlich mindestens ein Si-gebundenes Wasserstoffatom enthalten sein. Bevorzugt sind lineare Organopolysiloxane mit durchschnittlich mindestens einem kettenständigen Si-gebundenen Wasserstoffatom. Bevorzugt sind auch SiH-terminierte, lineare Organopolysiloxane, wobei auf Grund unvollständiger SiH-Funktionalisierung der Kettenenden und damit verbundener restlicher Si-OH-Gruppen am Kettenende auch ein geringer Anteil an Organopolysiloxanen mit nur einem Si-gebundenen Wasserstoffatom und ein geringer Anteil an Organopolysiloxanen mit keinem Si-gebundenen Wasserstoffatom vorhanden sind.

(A-E) ist eine bevorzugte Variante von (A), aber es muss pro Molekül durchschnittlich mindestens ein Rest mit einer aliphatischen Kohlenstoff-Kohlenstoff-Mehrfachbindung und pro Molekül durchschnittlich mindestens ein Si-gebundenes Wasserstoffatom enthalten sein.

Die Zusammensetzung des Polyorganosiloxans (A) mit einem OH-Gehalt, bezogen auf Si-gebundene OH-Gruppen, von 1-100 Gew.-ppm entspricht vorzugsweise der durchschnittlichen allgemeinen Formel (1) (die OH-Gruppen wurden auf Grund des geringen Anteils nicht in der Formel (1) abgebildet)

R¹ ₓR² _{y}SiO_{(4-x-y)/2} (1),

in der
**R**^{**1**} einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff Mehrfachbindungen enthält,
**R**^{**2**} einen einwertigen, gegebenenfalls halogen- oder cyanosubstituierten, über SiC-gebundenen C₁-C₁₀-Kohlenwasserstoffrest, der frei ist von aliphatischen Kohlenstoff-Kohlenstoff Mehrfachbindungen
**x** eine solche nichtnegative Zahl, dass bei mindestens 50% aller Polyorganosiloxan-Moleküle zwei Reste **R**^{**1**} in jedem Molekül vorhanden sind, und
**y** eine nicht negative Zahl, so dass **(x+y)** im Bereich von 1,8 bis 2,5 liegt, bedeuten.

Die Alkenylgruppen **R**^{**1**} sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Die Reste **R**^{**1**} können in jeder Position der Polymerkette, insbesondere an den endständigen Siliciumatomen, gebunden sein.

Beispiele für unsubstituierte Reste **R**^{**2**} sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R**^{**2**} sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

**R**^{**2**} weist vorzugsweise 1 bis 6 Kohlenstoffatome auf. Insbesondere bevorzugt sind Methyl, 3,3,3-Trifluorpropyl und Phenyl.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung linearer, Vinylgruppen enthaltender Polydimethylsiloxane mit einer Viskosität von vorzugsweise 0,2-5.000 Pas, insbesondere 1-2.000 Pas bei 25°C.

(B) verstärkende Füllstoffe sind z.B. vorzugsweise gefällte oder pyrogene Kieselsäuren, aber auch Ruß. Bevorzugt sind gefällte und pyrogene Kieselsäuren, sowie Gemische derselben. Besonders bevorzugt sind mit Silyliermittel oberflächenbehandelte Kieselsäuren. Die Hydrophobierung der Kieselsäuren kann entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Als Silylier-Agenzien können alle dem Fachmann bekannten Hydrophobiermittel verwendet werden. Diese sind z.B. vorzugsweise Silazane, insbesondere Hexamethyldisilazan und/oder 1,3-Divinyl-1,1,3,3-tetramethyldisilazan, und/oder Polysilazane, wobei auch zusätzlich Wasser eingesetzt werden kann. Auch SiOH- und/oder SiCl- und/oder Alkoxy-funktionelle Silane bzw. Siloxane können als Hydrophobiermittel verwendet werden. Ebenso können cyclische, lineare oder verzeigte nicht-funktionelle Organosiloxane, wie z.B. Octamethylcyclotetrasiloxan oder Polydimethylsiloxan, als Silylier-Agenzien eingesetzt werden.

Um die Hydrophobierung zu beschleunigen, ist auch der Zusatz von katalytisch aktiven Additiven, wie z.B. Ammoniak, Ammoniumsalze, Hydroxide, Phosphoniumhydroxide, Silanolate oder Siloxanolate, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugt ist eine Kieselsäure mit einer spezifischen Oberfläche nach BET von 80-400 m²/g, besonders bevorzugt 100-400 m²/g.

(F) Als Hydrosilylierungskatalysator können vorzugsweise alle bekannten Katalysatoren eingesetzt werden, welche die bei der Vernetzung von additionsvernetzenden Siliconmassen ablaufenden Hydrosilylierungsreaktionen katalysieren. Als Hydrosilylierungskatalysatoren können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP-A-1077226 und EP-A-994159 beschriebenen Platinverbindungen.

Der Hydrosilylierungskatalysator kann in jeder beliebigen Form eingesetzt werden, beispielsweise auch in Form von Hydrosilylierungskatalysator enthaltenden Mikrokapseln, oder Organopolysiloxanpartikeln, wie beschrieben in EP-A-1006147.

Der Gehalt an Hydrosilylierungskatalysatoren wird so gewählt, dass die additionsvernetzbare Siliconmasse einen Pt-Gehalt von 0,1-200 Gew.-ppm, bevorzugt von 0,5-40 Gew.-ppm, besitzt.

(H) SiH-Vernetzer, der im Mittel mindestens zwei SiH-Funktionen pro Molekül aufweist, besitzt vorzugsweise Einheiten der Formel (2)

HₐR³ _{b}SiO_{(4-a-b)/2} (2),

in der
**R**^{**3**} R² entspricht
mit der Maßgabe dass
**b** 0, 1, 2 oder 3 ist und **a** 0, 1 oder 2 ist, und dass durchschnittlich mindestens zwei siliciumgebundene Wasserstoffatome pro Molekül vorhanden sind.

Bevorzugt ist die Verwendung einer durchschnittlich drei oder mehr SiH-Gruppen pro Molekül enthaltenden Organosiliciumverbindung.

Der Wasserstoffgehalt der Organosiliciumverbindung, welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung enthält vorzugsweise mindestens drei und höchstens 600 Siliciumatome pro Molekül. Bevorzugt ist die Verwendung von Organosiliciumverbindung, die 4 bis 200 Siliciumatome pro Molekül enthält.

Die Struktur der Organosiliciumverbindung kann linear, verzweigt, cyclisch oder netzwerkartig sein.

Besonders bevorzugte Organosiliciumverbindungen sind lineare Polyorganosiloxane der allgemeinen Formel (3)

(HR⁴ ₂SiO_{1/2})_{c}(R⁴ ₃SiO_{1/2})_{d}(HR⁴SiO_{2/2})ₑ(R⁴ ₂SiO_{2/2})_{f} (3),

wobei
**R**^{**4**} die Bedeutungen von **R**^{**3**} hat und
die nichtnegativen ganzen Zahlen **c**, **d**, **e** und **f** folgende Relationen erfüllen: (**c+d**)=2, (**c+e**)>2, 5<(**e+f**)<200 und <**e**/(**e +f**)<1.

Die SiH-funktionelle Organosiliciumverbindung ist vorzugsweise in einer solchen Menge in der vernetzbaren Siliconmasse enthalten, dass das Molverhältnis von SiH-Gruppen zu Alkenylgruppen bei 0,2 bis 5, insbesondere bei 1,0 bis 3,0 liegt.

### (L) Peroxid

Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, tert.-Butylperoxy-isopropylcarbonat, Tert.-butylperoxyisononanoat, Dicyclohexylperoxydicarbonat und 2,5-Dimethylhexan-2,5-diperbenzoat, tert.-Butyl-β-hydroxyethylperoxid. Auch eine Kombination von organischen Peroxiden kann eingesetzt werden, wie Bis-4-Methylbenzoylperoxid und eine einzige Verbindung oder mindestens zwei der Verbindungen aus der Gruppe, die aus Benzoylperoxid, Dicumylperoxid, 2,5-Dimethylhexan-2,5-di-perbenzoat, Ditertiär-butylperoxid besteht.

Die Siliconmassen enthalten vorzugsweise 0,05 bis 10 Gew.-%, insbesondere 0,1 bis 2 Gew.-%, organisches Peroxid.

### Mögliche weitere Bestandteile (M):

Die Siliconmassen können wahlweise als weiteren Bestandteil weitere Zusätze zu einem Anteil von bis zu 70 Gew.-%, vorzugsweise 0,0001 bis 40 Gew.-%, enthalten. Diese Zusätze können z.B. harzartige Polyorganosiloxane, die von den Diorganopolysiloxanen verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Farbstoffe, Pigmente usw. Des Weiteren können als Bestandteil thixotropierende Bestandteile, wie hochdisperse Kieselsäure oder andere handelsübliche Thixotropieadditive enthalten sein.
Zusätzlich können auch als Kettenverlängerer Siloxane der Formel HSiR⁵ ₂-[O-SiR⁵ ₂]_{w}-H vorhanden sein, wobei **w** Werte von 1 bis 1000 bedeutet und R⁵ gleich R² ist.
Enthalten sein können des weiteren Zusätze, die der gezielten Einstellung der Verarbeitungszeit, Anspringtemperatur und Vernetzungsgeschwindigkeit der vernetzenden Massen dienen.

Diese Inhibitoren und Stabilisatoren sind auf dem Gebiet der vernetzenden Massen sehr gut bekannt.
Zusätzlich können auch Additive hinzugefügt werden, die den Druckverformungsrest verbessern. Zusätzlich können auch Hohlkörper hinzugefügt werden. Zusätzlich können auch Treibmittel zur Erzeugung von Schäumen hinzugefügt werden.

Die Compoundierung der Siliconmassen erfolgt durch Mischen von Organopolysiloxan (A), mit einem OH-Gehalt, bezogen auf Si-gebundene OH-Gruppen, von 1 bis 100 Gew.-ppm (A), und Füllstoff (B).

Die Vernetzung der vernetzbaren Siliconmassen, bestehend aus Organopolysiloxan (A-C) und Füllstoff (B), erfolgt nach Zugabe von SiH-Vernetzer (H) und Hydrosilylierungskatalysator (F) oder Peroxid (L) vorzugsweise durch Erwärmen.

Die Vernetzung der vernetzbaren Siliconmassen, bestehend aus Organopolysiloxan (A-D), das zusätzlich pro Molekül durchschnittlich mehr als einen Rest mit einer aliphatischen Kohlenstoff-Kohlenstoff-Mehrfachbindung enthält, und Füllstoff (B), erfolgt nach Zugabe von Hydrosilylierungskatalysator (F) vorzugsweise durch Erwärmen.

Die Vernetzung der vernetzbaren Siliconmassen, bestehend aus Organopolysiloxan (A-E) und Füllstoff (B), erfolgt nach Zugabe von Hydrosilylierungskatalysator (F) vorzugsweise durch Erwärmen.

Die Vernetzung erfolgt vorzugsweise bei 30 bis 250°C, bevorzugt bei mindestens 50°C, insbesondere bei mindestens 100°C, bevorzugt bei 150-200°C.

Die erfindungsgemäßen Massen finden vorzugsweise Verwendung als Pasten. Besonders eignen sich die erfindungsgemäßen vernetzenden Massen zur Herstellung von lagerstabilen RTV-2 und LSR-Massen, wobei vorzugsweise eine Komponente neben (A) und (B) den Hydrosilylierungskatalysator (F) und die zweite Komponente neben (A) und (B) den SiH-Vernetzer (H) enthält.

Ein weiterer Gegenstand der Erfindung ist ein bevorzugtes Verfahren zur Herstellung von vorzugsweise linearen Organopolysiloxanen mit Triorganosiloxygruppen als endständigen Einheiten aus linearem, in den endständigen Einheiten je eine Si-gebundene Hydroxylgruppe enthaltendem Organopolysiloxan und Siliciumverbindung mit zwei Triorganosilylgruppen und/oder zwei Hydrogendiorganosilylgruppen je Molekül, wobei als Katalysator Phosphornitridchlorid verwendet wird, dadurch gekennzeichnet, dass in den endständigen Einheiten je eine Si-gebundene Hydroxylgruppe enthaltendes, lineares Organopolysiloxan, nach dem es durch Kondensation in Gegenwart von Phosphornitridchlorid die gewünschte durchschnittliche Viskosität erreicht hat und noch Phosphornitridchlorid enthält, vorzugsweise in Abwesenheit von Füllstoffen mit einer BET-Oberfläche von mindestens 50 m²/g in Mengen, welche 1 Gewichtsprozent, bezogen auf das Gewicht der jeweils eingesetzten Menge an Organopolysiloxan, übersteigen, mit Hexaorganodisilazan in Mengen von 0,05 bis 1 Gewichtsprozent, ebenfalls bezogen auf das Gewicht der jeweils eingesetzten Menge an Organopolysiloxan, bei 155-200°C umgesetzt wird.

Bei dem erfindungsgemäßen Verfahren können beliebige, lineare, in den endständigen Einheiten je eine Si-gebundene Hydroxylgruppe enthaltende Organopolysiloxane eingesetzt werden, deren Viskosität auch bisher durch Kondensation in Gegenwart von Phosphornitridchlorid als Katalysator erhöht werden konnte. Beispiele für derartige Organopolysiloxane sind insbesondere solche der Formel

HO(SiR⁶ ₂O)ₘH.

In dieser Formel entspricht R⁶ den Resten R¹, R² und H. Vorzugsweise hat m einen solchen Wert, dass die durchschnittliche Viskosität des Organopolysiloxans, bevor es mit Phosphornitridchlorid vermischt wird, höchstens 500 mm². s⁻¹ bei 25°C beträgt.
Obwohl durch die obige, häufig verwendete Formel nicht dargestellt, können Einheiten der Formel SiR⁶ ₂O durch andere, wie solche der Formel R⁶SiO_{3/2}, R₃ ⁶SiO_{1/2}, oder SiO_{4/2} ersetzt sein.

Das erfindungsgemäße Verfahren dürfte jedoch die größte Bedeutung für den Einsatz von solchen, in den endständigen Einheiten je eine Si-gebundene Hydroxylgruppe enthaltenden Organopolysiloxanen haben, die Diorganopolysiloxane sind, worin alle organischen Reste Methylgruppen sind.

Bei den Phosphornitridchloriden, in deren Gegenwart die gewünschte Viskosität der erfindungsgemäß mit Hexaorganodisilazan umzusetzenden Organopolysiloxane erreicht wird und welche die mit Hexaorganodisilazan umzusetzenden Organopolysiloxane noch enthalten, kann es sich um beliebige Phosphornitridchloride handeln, mit denen auch bisher die Kondensation von linearen, in den endständigen Einheiten je eine Si-gebundene Hydroxylgruppe enthaltenden Organopolysiloxanen gefördert werden konnte. Es können z. B. solche sein, die durch Umsetzung von 400 Gewichtsteilen Phosphorpentachlorid mit 130 Gewichtsteilen Ammoniumchlorid hergestellt wurden (vgl. z. B. "Berichte der Deutschen Chemischen Gesellschaft", 57. Jahrgang 1924, Seite 1345), oder solche sein, die durch Umsetzung von 2 Mol Phosphorpentachlorid mit 1 Mol Ammoniumchlorid erhältlich sind (vgl. z. B. US 3 839 388, ausgegeben 1. Oktober 1974, S. Nietzsche et al., Wacker-Chemie GmbH). Selbstverständlich können auch Gemische aus mindestens zwei verschiedenen Arten von Phosphornitridchloriden verwendet werden.
Phosphornitridchlorid wird vorzugsweise in Mengen von 1 bis 300 Gewichts-ppm, insbesondere 5 bis 100 Gewichts-ppm, jeweils bezogen auf das Gewicht der jeweils eingesetzten Menge an linearem, in den endständigen Einheiten je eine Si-gebundene Hydroxylgruppe enthaltendem Organopolysiloxan, verwendet.
Die Kondensation vom linearen, in den endständigen Einheiten je eine Si-gebundene Hydroxylgruppe aufweisenden Organopolysiloxan wird vorzugsweise bei 155 bis 200°C, bevorzugt bei 155 -190°C, besonders bevorzugt 160 bis 180°C, durchgeführt.

Um die Abführung des bei der Kondensation gebildeten Wassers zu erleichtern, wird die Kondensation vom linearen, in den endständigen Einheiten je eine Si-gebundene Hydroxylgruppe aufweisendem Organopolysiloxan vorzugsweise bei einem Druck unterhalb 800 hPa (abs.) durchgeführt. Diese Kondensation ist aber auch bei höheren Drücken durchführbar.

Das bei dem erfindungsgemäßen Verfahren eingesetzte Hexaorganodisilazan ist vorzugsweise solches der Formel

[R⁷Si]₂NH

wobei R⁷ gleiche oder verschiedene, einwertige, gegebenenfalls halogenierte Kohlenwasserstoffreste bedeutet. Vorzugsweise enthalten auch die Reste R⁷ höchstens 1 bis 10 Kohlenstoffatom(e) je Rest.

Besonders bevorzugt als Hexaorganodisilazan ist 1,3-Divinyl-1,1,3,3-tetramethyldisilazan. Ein wichtiges bei dem erfindungsgemäßen Verfahren einsetzbares Hexaorganodisilazan ist auch Hexamethyldisilazan.

Vorzugsweise wird Hexaorganodisilazan in Mengen von 0,1 bis 1,0 Gewichtsprozent, bezogen auf das Gewicht der jeweils eingesetzten Menge an Diorganopolysiloxan, verwendet, wobei eine Menge von 0,3-1,0 Gewichtsprozent vorteilhaft zur Steuerung des OH-Gehalts verwendet werden kann, wobei die Menge jedoch von der Art der eingesetzten Verbindungen abhängt, d.h je nachdem wie groß ihr Molekulargewicht und ihre Zusammensetzung ist.

Die Umsetzung vom Hexaorganodisilazan mit dem linearen, in den endständigen Einheiten Hydroxylgruppen aufweisenden Organopolysiloxan findet beim Vermischen der beiden vorstehend genannten Reaktionsteilnehmer miteinander bzw. nach diesem Vermischen statt. Der bei der Umsetzung von Si-gebundenen Hydroxylgruppen mit Hexaorganodisilazan zu Triorganosiloxygruppen gebildete Ammoniak macht den Katalysator unwirksam.
Das erfindungsgemäße Verfahren kann absatzweise oder kontinuierlich durchgeführt werden. Vorzugsweise wird es kontinuierlich durchgeführt.
Vorzugsweise wird das Hexaorganodisilazan dem in den endständigen Einheiten Si-gebundene Hydroxylgruppe enthaltenden, linearen Organopolysiloxan, nachdem es die gewünschte durchschnittliche Viskosität erreicht hat, erst nach dem Entnehmen dieses Organopolysiloxans aus dem Gefäß, in dem die Kondensation der Si-gebundenen Hydroxylgruppen miteinander stattfand, zugesetzt.

Die Reaktionszeit beträgt vorzugsweise 10 Minuten bis 48 Stunden, bevorzugt 15 min bis 24 Stunden, besonders bevorzugt 20 Minuten bis 20 Stunden. Über die Reaktionszeit lässt sich der OH-Gehalt steuern, wobei die Reaktionszeit jedoch von der Art der eingesetzten Verbindungen abhängt, d.h je nachdem wie groß ihr Molekulargewicht und ihre Zusammensetzung ist.

Die erfindungsgemäß hergestellten linearen Organopolysiloxane mit Triorganosiloxygruppen als endständigen Einheiten können für alle Zwecke verwendet werden, bei denen auch die nach den bisher bekannten Verfahren hergestellten linearen Organopolysiloxane mit Triorganosiloxygruppen als endständigen Einheiten eingesetzt werden konnten, z. B. als Fadengleitmittel und zur Herstellung von Organopolysiloxanelastomeren.
Das in den folgenden Beispielen verwendete Phosphornitridchlorid wurde hergestellt wie folgt:
Ein Gemisch aus 417 g (2 Mol) Phosphorpentachlorid und 53,5 g (1 Mol) Ammoniumchlorid in 1000 ml Tetra hlorethan wird 12 Stunden zum Sieden unter Rückfluss erwärmt. Aus der so erhaltenen, hellgelben Lösung werden bei 160°C und unter Erniedrigung des Drucks bis auf etwa 1,33 hPa (abs.) die flüchtigen Anteile entfernt. Als Rückstand verbleiben gelbliche Kristalle, die im wesentlichen aus der Verbindung der Formel

Cl₃PNPCl₂NPCl₃ · PCl₆

bestehen.

Die Erfindung beruht darauf, dass durch Verwendung von Polyorganosiloxanen mit einem OH-Gehalt, bezogen auf Si-gebundene OH-Gruppen, von 1 bis 100 Gew.-ppm besonders lagerstabile Siliconmassen, welche verstärkende Füllstoffe enthalten, hergestellt werden können. Dies bedeutet, dass durch Verwendung dieser Polyorganosiloxane ein Anstieg der Viskosität über mehrere Monate verhindert oder zumindest deutlich reduziert werden kann. Sowohl bei üblichen Lagertemperaturen von bis zu 35°C als auch bei höheren Temperaturen wird der Viskositätsanstieg reduziert.

### Beispiele:

### Beispiel 1 (nicht erfindungsgemäß):

In einem Laborkneter wurden 156 g eines trimethylsiloxyterminierten Polydimethylsiloxans mit einer Viskosität von 20.000 mPa*s (25°C) vorgelegt, auf 150°C aufgeheizt und mit 110 g einer hydrophoben pyrogenen Kieselsäure mit einer spezifischen Oberfläche nach BET von 300 m²/g und einem Kohlenstoffgehalt von 4,2 Gew.-% versetzt. Diese hochviskose Masse wurde anschließend mit 141 g des oben genannten Polydimethylsiloxans verdünnt. Durch Kneten unter Vakuum (10 mbar) bei 150°C wurden innerhalb einer Stunde flüchtige Bestandteile entfernt. Das eingesetzte trimethylsiloxyterminierte Polydimethylsiloxan hatte einen hohen Anteil restlicher Hydroxydimethylsiloxy-Endgruppen. Der OH-Gehalt Betrug 200 Gew.-ppm bezogen auf das verwendete Polydimethylsiloxan.

### Beispiel 2

Im Unterschied zu Beispiel 1 wurde ein trimethylsiloxyterminiertes Polydimethylsiloxan mit einem OH-Gehalt von 60 Gew.-ppm eingesetzt.

### Beispiel 3

Im Unterschied zu Beispiel 1 wurde ein trimethylsiloxyterminiertes Polydimethylsiloxan mit einem OH-Gehalt von 5 Gew.-ppm eingesetzt.

### Beispiel 4 (nicht erfindungsgemäß):

Im Unterschied zu Beispiel 1 wurde ein trimethylsiloxyterminiertes Polydimethylsiloxan mit einem OH-Gehalt von 0,5 Gew.-ppm eingesetzt.

**Tabelle 1:**

| Einfluss des OH-Gehalts auf die Lagerstabilität bei 25 und 50°C. | | | | |
|---|---|---|---|---|
| | OH-Gehalt des trimethylsiloxy-terminierten Polydimethylsiloxans [Gew.-ppm] | Anfangsviskosität der Siliconmasse [Pa*s] | Viskosität der Siliconmasse nach 4 Wochen bei 25°C [Pa*s] | Viskosität der Siliconmasse nach 4 Wochen bei 50°C [Pa*s] |
| Beispiel 1* | 200 | 810 | 1.320 | 1.560 |
| Beispiel 2 | 60 | 790 | 850 | 940 |
| Beispiel 3 | 5 | 780 | 790 | 820 |
| Beispiel 4* | 0,5 | 790 | 870 | 990 |

| | | | | |
|---|---|---|---|---|
| * nicht erfindungsgemäß | | | | |

Aus Tabelle 1 ist ersichtlich, dass ein OH-Gehalt von 1-100 Gew.-ppm eine erhebliche Verbesserung der Lagerstabilität beim Einsatz vorhydrophobierter Kieselsäure zur Folge hat.

### Beispiel 5 (nicht erfindungsgemäß):

In einem Laborkneter wurden 156 g eines vinyldimethylsiloxy-terminierten Polydimethylsiloxans mit einer Viskosität von 20.000 mPa*s (25°C) vorgelegt, auf 150°C aufgeheizt und mit 110 g einer hydrophoben pyrogenen Kieselsäure mit einer spezifischen Oberfläche nach BET von 300 m²/g und einem Kohlenstoffgehalt von 4,2 Gew.-% versetzt. Diese hochviskose Masse wurde anschließend mit 141 g des oben genannten vinyldimethylsiloxy-terminierten Polydimethylsiloxans verdünnt.

Durch Kneten unter Vakuum (10 mbar) bei 150°C wurden innerhalb einer Stunde flüchtige Bestandteile entfernt. Das eingesetzte vinyldimethylsiloxy-terminierte Polydimethylsiloxan hatte einen hohen Anteil restlicher Hydroxydimethylsiloxy-Endgruppen. Der OH-Gehalt Betrug 180 Gew.-ppm bezogen auf das verwendete Polydimethylsiloxan.

### Beispiel 6

Im Unterschied zu Beispiel 5 wurde ein vinyldimethylsiloxy-terminiertes Polydimethylsiloxan mit einem OH-Gehalt von 50 Gew.-ppm eingesetzt.

### Beispiel 7

Im Unterschied zu Beispiel 5 wurde ein vinyldimethylsiloxy-terminiertes Polydimethylsiloxan mit einem OH-Gehalt von 5 Gew.-ppm eingesetzt.

### Beispiel 8 (nicht erfindungsgemäß):

Im Unterschied zu Beispiel 5 wurde ein vinyldimethylsiloxy-terminiertes Polydimethylsiloxan mit einem OH-Gehalt von 0,4 Gew.-ppm eingesetzt.

**Tabelle 2:**

| Einfluss des OH-Gehalts auf die Lagerstabilität bei 25 und 50°C. | | | | | |
|---|---|---|---|---|---|
| | OH-Gehalt des vinyldimethylsiloxyterminierten Polydimethylsiloxans [Gew.-ppm] | Anfangsviskosität der Siliconmasse [Pa*s] | Viskosität der Siliconmasse nach 4 Wochen bei 25°C [Pa*s] | Viskosität der Siliconmasse nach 6 Monaten bei 25°C [Pa*s] | Viskosität der Siliconmasse nach 4 Wochen bei 50°C [Pa*s] |
| Beispiel 5* | 180 | 930 | 1.520 | 1.900 | 1.630 |
| Beispiel 6 | 50 | 820 | 890 | 1.010 | 1.090 |
| Beispiel 7 | 5 | 820 | 780 | 920 | 850 |
| Beispiel 8* | 0,4 | 840 | 910 | 1080 | 1120 |

| | | | | | |
|---|---|---|---|---|---|
| * nicht erfindungsgemäß | | | | | |

Aus Tabelle 2 ist ersichtlich, dass ein OH-Gehalt von 1-100 Gew.-ppm eine erhebliche Verbesserung der Lagerstabilität beim Einsatz vorhydrophobierter Kieselsäure zur Folge hat.

### Beispiel 9 (nicht erfindungsgemäß):

In einem Kneter wurden 156 g eines vinyldimethylsiloxy-terminierten Polydimethylsiloxans mit einer Viskosität von 20.000 mPa*s (25°C) vorgelegt und mit 27 g Hexamethyldisilazan und 9,3 g Wasser gemischt, anschließend mit 100 g pyrogener Kieselsäure mit einer BET-Oberfläche von 300 m²/g vermischt, auf 100 °C erwärmt und anschließend 1 h geknetet. Danach wurden bei 150°C flüchtige Bestandteile im Vakuum entfernt und anschließend mit 141 g vinyldimethylsiloxy-terminiertem Polydimethylsiloxan mit einer Viskosität von 20.000 mPa*s verdünnt. Das eingesetzte vinyldimethylsiloxy-terminierte Polydimethylsiloxan hatte einen hohen Anteil restlicher Hydroxydimethylsiloxy-Endgruppen. Der OH-Gehalt Betrug 180 Gew.-ppm bezogen auf das verwendete Polydimethylsiloxan.

### Beispiel 10

Im Unterschied zu Beispiel 9 wurde ein vinyldimethylsiloxy-terminiertes Polydimethylsiloxan mit einem OH-Gehalt von 50 Gew.-ppm eingesetzt.

### Beispiel 11

Im Unterschied zu Beispiel 9 wurde ein vinyldimethylsiloxy-terminiertes Polydimethylsiloxan mit einem OH-Gehalt von 5 Gew.-ppm eingesetzt.

### Beispiel 12 (nicht erfindungsgemäß):

Im Unterschied zu Beispiel 9 wurde ein vinyldimethylsiloxy-terminiertes Polydimethylsiloxan mit einem OH-Gehalt von 0,4 Gew.-ppm eingesetzt.

**Tabelle 3:**

| Einfluss des OH-Gehalts auf die Lagerstabilität bei 25 und 50°C. | | | | |
|---|---|---|---|---|
| | OH-Gehalt des vinyldimethylsiloxyterminierten Polydimethylsiloxans [Gew.-ppm] | Anfangsviskosität der Siliconmasse [Pa*s] | Viskosität der Siliconmasse nach 4 Wochen bei 25°C [Pa*s] | Viskosität der Siliconmasse nach 4 Wochen bei 50°C [Pa*s] |
| Beispiel 9* | 180 | 780 | 1.200 | 1.290 |
| Beispiel 10 | 50 | 700 | 770 | 850 |
| Beispiel 11 | 5 | 720 | 740 | 770 |
| Beispiel 12* | 0,4 | 740 | 850 | 910 |

| | | | | |
|---|---|---|---|---|
| * nicht erfindungsgemäß | | | | |

Aus Tabelle 3 ist ersichtlich, dass ein OH-Gehalt von 1-100 Gew.-ppm eine erhebliche Verbesserung der Lagerstabilität von Siliconmassen, auch bei in-situ Hydrophobierung der Kieselsäure in Gegenwart des Polydimethylsiloxans, zur Folge hat.

### Beispiel 13 (nicht erfindungsgemäß):

In einem Laborkneter wurden 156 g eines vinyldimethylsiloxy-terminierten Polydimethylsiloxans mit einer Viskosität von 1.000.000 mPa*s (25°C) vorgelegt, auf 150°C aufgeheizt und mit 50 g einer hydrophoben pyrogenen Kieselsäure mit einer spezifischen Oberfläche nach BET von 300 m²/g und einem Kohlenstoffgehalt von 4,2 Gew.-% versetzt. Diese hochviskose Masse wurde anschließend mit 141 g des oben genannten vinyldimethylsiloxy-terminierten Polydimethylsiloxans verdünnt. Durch Kneten unter Vakuum (10 mbar) bei 150°C wurden innerhalb einer Stunde flüchtige Bestandteile entfernt. Das eingesetzte vinyldimethylsiloxy-terminierte Polydimethylsiloxan hatte einen hohen Anteil restlicher Hydroxydimethylsiloxy-Endgruppen. Der OH-Gehalt Betrug 170 Gew.-ppm bezogen auf das verwendete Polydimethylsiloxan.

### Beispiel 14

Im Unterschied zu Beispiel 13 wurde ein vinyldimethylsiloxy-terminiertes Polydimethylsiloxan mit einem OH-Gehalt von 40 Gew.-ppm eingesetzt.

### Beispiel 15

Im Unterschied zu Beispiel 13 wurde ein vinyldimethylsiloxy-terminiertes Polydimethylsiloxan mit einem OH-Gehalt von 5 Gew.-ppm eingesetzt.

### Beispiel 16 (nicht erfindungsgemäß):

Im Unterschied zu Beispiel 13 wurde ein vinyldimethylsiloxy-terminiertes Polydimethylsiloxan mit einem OH-Gehalt von 0,6 Gew.-ppm eingesetzt.

**Tabelle 4:**

| Einfluss des OH-Gehalts auf die Lagerstabilität bei 25 und 50°C. | | | | |
|---|---|---|---|---|
| | OH-Gehalt des vinyldimethylsiloxy-terminierten Polydimethylsiloxans [Gew.-ppm] | Anfangsviskosität der Siliconmasse [Pa*s] | Viskosität der Siliconmasse nach 4 Wochen bei 25°C [Pa*s] | Viskosität der Siliconmasse nach 4 Wochen bei 50°C [Pa*s] |
| Beispiel 13* | 170 | 3.500 | 8.700 | 9.800 |
| Beispiel 14 | 40 | 3.300 | 3.600 | 3.900 |
| Beispiel 15 | 5 | 3.200 | 3.300 | 3.350 |
| Beispiel 16* | 0,6 | 3.300 | 3.700 | 4.200 |

| | | | | |
|---|---|---|---|---|
| * nicht erfindungsgemäß | | | | |

Aus Tabelle 4 ist ersichtlich, dass ein OH-Gehalt von 1-100 Gew.-ppm die Lagerstabilität erheblich verbessert.

### Beispiel 17

550 g der in Beispiel 6 beschriebenen Siliconmasse wurden mit 0,40 g Ethinylcyclohexanol, 12,7 g eines Mischpolymerisats aus Dimethylsiloxy-, Methylhydrogensiloxy- und Trimethylsiloxy-Einheiten mit einer Viskosität von 300 mPa*s bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Diese additionsvernetzende Siliconmasse wurde anschließend in einer hydraulischen Presse bei einer Temperatur von 165°C innerhalb von 5 Minuten zu einer Siliconelastomerfolie, mit einer Härte von 43 Shore A, einer Reißdehnung von 660% und einer Reißfestigkeit von 11 N/mm², vernetzt.

### Beispiel 18

Zu 550 g der in Beispiel 6 beschriebenen Siliconmasse wurden 1,9 g 2,5-Bis-(tert.-butylperoxo)2,5-dimethylhexan eingearbeitet und diese Mischung bei 165°C innerhalb von 15 min zu einer Siliconelastomerfolie, mit einer Härte von 40 Shore A, einer Reißdehnung von 550% und einer Reißfestigkeit von 10 N/mm², vernetzt.

### Beispiel 19 (Herstellung des in Beispiel 5 verwendeten vinyldimethylsiloxy-terminierten Polydimethylsiloxans) (nicht erfindungsgemäß)

In einem Doppelschneckenkneter mit einer bei 140°C und 6,7 hPa gehaltenen 140 cm langen Reaktionszone wurde kontinuierlich pro Stunde eine Mischung eingespeist, die aus 312 g eines linearen hydroxydimethylsiloxy-terminierten Polydimethylsiloxans mit einer Viskosität von 80 mm²/s bei 25°C und 16,2 g eines linearen vinyldimethylsiloxy-terminierten Polydimethylsiloxans mit einer Viskosität von 28 mm²/s bei 25°C und 10 Gew.-ppm (bezogen auf die Polydimethylsiloxanmischung) Phosphornitridchlorid in Form einer 0,5 gewichtsprozentigen Lösung in Methylenchlorid bestand. Im Austragrohr des durch Kondensation bzw. Equilibrierung erhaltenen Polyorganosiloxans wurden bei 140°C pro Stunde 0,66 g 1,1-Divinyl-1,1,3,3-tetramethyldisilazan dosiert. Nach einer Lagerzeit von 6 Stunden wurde ein vinyldimethylsiloxy-terminiertes Polydimethylsiloxan mit einer Viskosität von 20.000 mPas und einem OH-Gehalt von 180 Gew.-ppm erhalten.

### Beispiel 20 (Herstellung des in Beispiel 7 verwendeten vinyldimethylsiloxy-terminierten Polydimethylsiloxans)

Im Unterschied zu Beispiel 19 wurde die Reaktionstemperatur auf 170°C erhöht und die Menge an 1,1-Divinyl-1,1,3,3-tetramethyldisilazan auf 2,1 g pro Stunde angehoben. Nach einer Lagerzeit von 12 Stunden wurde ein vinyldimethylsiloxy-terminiertes Polydimethylsiloxan mit einer Viskosität von 20.000 mPas und einem OH-Gehalt von 5 Gew.-ppm erhalten.

Beispielhaft kann der OH-Gehalt mit Hilfe der ¹H-NMR-Spektroskopie bestimmt werden, wobei die SiOH-Gruppen mit geeigneten Agenzien derivatisiert werden. Die Nachweisgrenze dieser Methode liegt bei 0,2 Gew.-ppm. Auch andere Verfahrensmethoden können zur Bestimmung des SiOH-Gehalts verwendet werden.

Die Charakterisierung der Siliconelastomereigenschaften erfolgten gemäß DIN 53505 (Shore A), DIN 53504-S1 (Reißfestigkeit und Reißdehnung). Die Viskosität wurde bei einer Scherrate von 0,9 s⁻¹ bestimmt.

## Patentansprüche

1. Siliconmassen, enthaltend
(A) 100 Gewichtsteile Organopolysiloxan(e) mit einem OH-Gehalt, bezogen auf Si-gebundene OH-Gruppen, von 1 bis 100 Gew.-ppm.
(B) 1-200 Gewichtsteile Füllstoff(e) mit einer spezifischen Oberfläche von mindestens 50 m²/g.

2. Siliconmassen nach Anspruch 1, **dadurch gekennzeichnet, dass** die (A-C) Organopolysiloxan(e) pro Molekül durchschnittlich mindestens einen Rest mit einer aliphatischen Kohlenstoff-Kohlenstoff-Mehrfachbindung aufweisen.

3. Siliconmassen nach Anspruch 1, **dadurch gekennzeichnet, dass** die (A-D) Organopolysiloxan(e) pro Molekül durchschnittlich mindestens ein Si-gebundenes Wasserstoffatom aufweisen.

4. Siliconmassen nach Anspruch 1, **dadurch gekennzeichnet, dass** die (A-E) Organopolysiloxan(e) pro Molekül durchschnittlich mindestens ein Si-gebundenes Wasserstoffatom aufweisen und pro Molekül durchschnittlich mindestens einen Rest mit einer aliphatischen Kohlenstoff-Kohlenstoff-Mehrfachbindung aufweisen.

5. Vernetzbare Siliconmassen nach Anspruch 2, **dadurch gekennzeichnet, dass** sie zusätzlich
(F) Hydrosilylierungskatalysator und
(H) SiH-Vernetzer enthalten.

6. Vernetzbare Siliconmassen nach Anspruch 3, **dadurch gekennzeichnet, dass** die (A-D) Organopolysiloxan(e) zusätzlich pro Molekül durchschnittlich mehr als einen Rest mit einer aliphatischen Kohlenstoff-Kohlenstoff-Mehrfachbindung aufweisen und zusätzlich einen
(F) Hydrosilylierungskatalysator enthalten.

7. Vernetzbare Siliconmassen nach Anspruch 4, **dadurch gekennzeichnet, dass** zusätzlich ein
(F) Hydrosilylierungskatalysator enthalten ist.

8. Vernetzbare Siliconmassen nach Anspruch 2, **dadurch gekennzeichnet, dass** zusätzlich
(L) ein Peroxid enthalten ist.

9. Siliconmassen nach einem oder mehreren der Ansprüche 1-8, **dadurch gekennzeichnet, dass** der Füllstoff gefällte und/oder pyrogene Kieselsäure ist, die gegebenenfalls eine hydrophobierte Kieselsäure ist.

10. Formkörper hergestellt durch Vernetzung der erfindungsgemäßen Massen gemäß einem oder mehreren der Ansprüche 5-8.

11. Verfahren zur Herstellung von linearen Organopolysiloxanen mit Triorganosiloxygruppen als endständigen Einheiten aus linearem, in den endständigen Einheiten je eine Si-gebundene Hydroxylgruppe enthaltendem Organopolysiloxan und Siliciumverbindung mit zwei Triorganosilylgruppen und/oder zwei Hydrogendiorganosilylgruppen je Molekül, wobei als Katalysator Phosphornitridchlorid verwendet wird, **dadurch gekennzeichnet, dass** in den endständigen Einheiten je eine Si-gebundene Hydroxylgruppe enthaltendes, lineares Organopolysiloxan, nach dem es durch Kondensation in Gegenwart von Phosphornitridchlorid die gewünschte durchschnittliche Viskosität erreicht hat und noch Phosphornitridchlorid enthält, mit Hexaorganodisilazan in Mengen von 0,05 bis bis 1 Gewichtsprozent, ebenfalls bezogen auf das Gewicht der jeweils eingesetzten Menge an Organopolysiloxan, bei 155 -200°C umgesetzt wird.

12. Verfahren nach Anspruch 11, **dadurch gekennzeichnet, dass** als Hexaorganodisilazan 1,1-Divinyl-1,1,3,3-tetramethyldisilazan verwendet wird.

## Claims

1. Silicone compositions comprising
(A) 100 parts by weight of organopolysiloxane(s) having an OH content, based on Si-bonded OH groups, of 1 to 100 weight ppm.
(B) 1-200 parts by weight of filler(s) having a specific surface area of at least 50 m²/g.

2. Silicone compositions according to Claim 1, **characterized in that** the (A-C) organopolysiloxane(s) contain, per molecule, on average at least one radical having an aliphatic carbon-carbon multiple bond.

3. Silicone compositions according to Claim 1, **characterized in that** the (A-D) organopolysiloxane(s) contain, per molecule, on average at least one Si-bonded hydrogen atom.

4. Silicone compositions according to Claim 1, **characterized in that** the (A-E) organopolysiloxane(s) contain, per molecule, on average at least one Si-bonded hydrogen atom and contain, per molecule, on average at least one radical having an aliphatic carbon-carbon multiple bond.

5. Crosslinkable silicone compositions according to Claim 2, **characterized in that** they additionally comprise
(F) hydrosilylation catalyst and
(H) SiH crosslinking agent.

6. Crosslinkable silicone compositions according to Claim 3, **characterized in that** the (A-D) organopolysiloxane(s) additionally comprise, per molecule, on average more than one radical having an aliphatic carbon-carbon multiple bond, and they additionally comprise a
(F) hydrosilylation catalyst.

7. Crosslinkable silicone compositions according to Claim 4, **characterized in that** they additionally comprise a
(F) hydrosilylation catalyst.

8. Crosslinkable silicone compositions according to Claim 2, **characterized in that** they additionally comprise
(L) a peroxide.

9. Silicone compositions according to one or more of Claims 1-8, **characterized in that** the filler is precipitated and/or pyrogenic silica, which is optionally a hydrophobized silica.

10. Shaped articles produced by crosslinking the compositions according to the invention according to one or more of Claims 5-8.

11. Process for the preparation of linear organopolysiloxanes having triorganosiloxy groups as terminal units from a linear organopolysiloxane containing in each case an Si-bonded hydroxyl group in the terminal units and a silicon compound having two triorganosilyl groups and/or two hydridodiorganosilyl groups per molecule, phosphonitrile chloride being used as the catalyst, **characterized in that** it comprises reacting a linear organopolysiloxane containing in each case an Si-bonded hydroxyl group in the terminal units, after it has reached the desired average viscosity by condensation in the presence of phosphonitrile chloride and still contains phosphonitrile chloride, with a hexaorganodisilazane in amounts of 0.05 to 1 per cent by weight, also based on the weight of the particular amount of organopolysiloxane employed, at 155 - 200°C.

12. Process according to Claim 11, **characterized in that** 1,1-divinyl-1,1,3,3-tetramethyldisilazane is used as the hexaorganodisilazane.

## Revendications

1. Masses siliconées, contenant
(A) 100 parties en poids d'organopolysiloxane(s) d'une teneur en OH, par rapport aux groupes OH liés au Si, de 1 à 100 ppm en poids,
(B) 1 à 200 parties en poids de charge(s) d'une surface spécifique d'au moins 50 m²/g.

2. Masses siliconées selon la revendication 1, **caractérisées en ce que** le ou les organopolysiloxane(s) (A - C) présente(nt) en moyenne, par molécule, au moins un radical comportant une liaison carbone - carbone aliphatique multiple.

3. Masses siliconées selon la revendication 1, **caractérisées en ce que** le ou les organopolysiloxane(s) (A - D) présente(nt) en moyenne, par molécule, au moins un atome d'hydrogène lié au Si.

4. Masses siliconées selon la revendication 1, **caractérisées en ce que** le ou les organopolysiloxane(s) (A - E) présente(nt) en moyenne, par molécule, au moins un atome d'hydrogène lié au Si et en moyenne, par molécule, au moins un radical comportant une liaison carbone - carbone aliphatique multiple.

5. Masses siliconées réticulables selon la revendication 2, **caractérisées en ce qu'**elles contiennent en outre
(F) un catalyseur d'hydrosilylation et
(H) un réticulant de SiH.

6. Masses siliconées réticulables selon la revendication 3, **caractérisées en ce que** le ou les organopolysiloxane(s) (A - D) présente(nt) en outre en moyenne, par molécule, plus d'un radical comportant une liaison carbone - carbone aliphatique multiple, et en outre
(F) un catalyseur d'hydrosilylation.

7. Masses siliconées réticulables selon la revendication 4, **caractérisées en ce qu'**elles contiennent en outre
(F) un catalyseur d'hydrosilylation.

8. Masses siliconées réticulables selon la revendication 2, **caractérisées en ce qu'**elles contiennent en outre
(L) un peroxyde.

9. Masses siliconées selon l'une quelconque ou plusieurs des revendications 1 à 8, **caractérisées en ce que** la charge est de l'acide silicique précipité et/ou pyrogène, lequel est le cas échéant un acide silicique rendu hydrophobe.

10. Corps façonnés préparés par réticulation des masses selon l'invention selon l'une quelconque ou plusieurs des revendications 5 à 8.

11. Procédé de préparation d'organopolysiloxanes linéaires comprenant des groupes triorganosiloxy en tant qu'unités terminales à partir d'un organopolysiloxane linéaire contenant à chaque fois, dans les unités terminales, un groupe hydroxyle lié au Si et d'un composé de silicium comprenant deux groupes triorganosilyle et/ou deux groupes hydrogénodiorganosilyle par molécule, dans lequel on utilise en tant que catalyseur du nitrure-dichlorure de phosphore, **caractérisé en ce que** l'on fait réagir l'organopolysiloxane linéaire contenant à chaque fois, dans les unités terminales, un groupe hydroxyle lié au Si, quand il a atteint la viscosité moyenne souhaitée par condensation en présence de nitrure-dichlorure de phosphore et contient encore du nitrure-dichlorure de phosphore, avec de l'hexaorganodisilazane en des quantités de 0,05 à 1% en poids, également par rapport au poids de la quantité respective d'organopolysiloxane mise en oeuvre, à une température de 155 à 200°C.

12. Procédé selon la revendication 11, **caractérisé en ce que** l'on utilise en tant qu'hexaorganodisilazane du 1,1-divinyl-1,1,3,3-tétraméthyldisilazane.
